Europäisches Patentamt

European Patent Office

Office européen des brevets

(11) Veröffentlichungsnummer: **0 281 901**
**A1**

(12) **EUROPÄISCHE PATENTANMELDUNG**

(21) Anmeldenummer: 88103091.0

(22) Anmeldetag: 01.03.88

(51) Int. Cl.⁴: **H05B 7/16** , H05B 7/08 , C03B 37/14

(30) Priorität: 04.03.87 DE 3706959

(43) Veröffentlichungstag der Anmeldung:
14.09.88 Patentblatt 88/37

(84) Benannte Vertragsstaaten:
AT BE CH DE FR GB IT LI NL SE

(71) Anmelder: Siemens Aktiengesellschaft Berlin
und München
Wittelsbacherplatz 2
D-8000 München 2(DE)

(72) Erfinder: Engel, Reinhard, Dr.-Ing.
Fröbelplatz 4
D-8000 München 21(DE)
Erfinder: Brugger, Rudolf, Dipl.-Ing. (FH)
Münchnerstrasse 17 d
D-8039 Puchheim(DE)

(54) Vorrichtung zur Erzeugung einer elektrischen Glimmentladung.

(57) Die Erfindung betrifft eine Vorrichtung zur Erzeugung einer elektrischen Glimmentladung für die Wärmebearbeitung von lichtleitenden Elementen. Zumindest die einander zugekehrten Endbereiche (EB1) der Elektroden (EL1) besteht aus einem Material, dessen Oxidationstemperatur über der von Wolfram liegt.

EP 0 281 901 A1

FIG 3

## Vorrichtung zur Erzeugung einer elektrischen Glimmentladung

Die Erfindung betrifft eine Vorrichtung zur Erzeugung einer elektrischen Glimmentladung für die Wärmebearbeitung von lichtleitenden Elementen mittels eines zwischen Elektroden erzeugten Lichtbogens.

Für die Bearbeitung von lichtleitenden Elementen, wie beispielsweise in der Spleiß-Schweißtechnik für Lichtwellenleiter, wird als Wärmequelle vorzugsweise eine elektrische Glimmentladung eingesetzt. Es ist bekannt, daß dabei für die Aufheizung der Entladungszone stets nur Elektroden aus Wolfram verwendet werden (applied optics - Vol. 15, No. 3; applied optics - Vol. 17, No. 12; DE-AS 27 13 711; DE-OS 32 11 848). Bei diesen Techniken heizt der zwischen den Wolfram-Elektroden erzeugte Lichtbogen die normale Luftatmosphäre bis zu 2000°C auf. Dieses heiße Gasgemisch ist wegen des atomaren Sauerstoffs und der Stickoxide sehr aggressiv, so daß die Spitzen der bisher eingesetzten Wolfram-Elektroden oxidieren. Diese werden wegen des sich bildenden elektrisch isolierenden Oxidbelages nach ca. 60 - 100 s unbrauchbar und müssen gereinigt werden. Außerdem wird durch die sich bildende Oxidschicht ein einseitiges Brennen der Glimmentladung begünstigt und damit deren Stabilität vermindert. Als Folge davon tritt ein häufiges Auslöschen und Neuzünden der Glimmentladung auf. Zum Neuzünden muß für ca. 20 ms eine Bogenentladung erzeugt werden, um die Luft zwischen den Elektroden zu ionisieren. Dabei werden starke elektromagnetische Störfelder erzeugt, die empfindliche elektronische Schaltungen, insbesondere solche mit Mikroprozessoren, im Umkreis bis zu 20 m kurzzeitig stören können. Da sich derartige Schaltungen fast durchwegs in unmittelbarer Nähe der Entladungszone befinden, wie beispielsweise in transportablen Spleißgeräten, können durch den Einsatz von Wolfram-Elektroden Störungen auftreten.

Der Erfindung liegt die Aufgabe zugrunde, die Elektroden einer Glimmentladungsvorrichtung derart auszubilden, daß über stundenlangen Betrieb ein sicheres und störungsfreies Brennverhalten an den Elektroden gewährleistet ist.

Diese Aufgabe wird bei einer Vorrichtung der eingangs genannten Art dadurch gelöst, daß zumindest die einander zugewandten Endbereiche der Elektroden aus einem Material bestehen, dessen Oxidationstemperatur über der von Wolfram liegt.

Da die Oxidationstemperatur der Elektrodenmaterialien wesentlich höher liegt als die des bislang verwendeten Wolframs (800 - 1100°C, je nach atmosphärischen Bedingungen), wird an den erfindungsgemäßen Elektroden eine Oxidbildung verhindert bzw. erschwert. Bevorzugte Materialien für den Einsatz im Rahmen der Erfindung sind Bor (Oxidationstemperatur 1100 - 1400°C) oder Molybtän-Zirkonium-Oxid (Oxidationstemperatur über 1700°C), z.B. das unter dem Handelsnamen "Cermotherm 2015" bekannte Material und vor allem Platin. Zwar überschreitet u.U. die Temperatur der Glimmentladung die Schmelztemperatur der für die Erfindung vorgesehenen Materialien doch tritt die Temperatur der Glimmentladung nur über der Oberfläche der Elektroden auf. Die Oberfläche der Elektroden selbst bleibt wegen der Wärmeleiteigenschaften des Platins unterhalb der Schmelztemperatur, womit ein Abschmelzen der Elektroden ausgeschlossen ist. Das Ausbleiben einer oberflächlichen Oxidation an den Elektroden bewirkt ein sauberes und gleichmäßiges Brennen der Glimmentladung. Das für ein Abreißen und Wiederzünden der Glimmentladung charakteristische Zischen und Knattern in schneller Folge und die damit verbundenen elektromagnetischen Störfelder unterbleiben dabei über mehr als 1000 s Betriebszeit (Standzeit). Durch die erfindungsgemäßen Elektroden wird deren Standzeit von ca. 60 - 100 s (Wolframelektroden) auf mehr als 1000 s erhöht, d.h. um mehr als das Zehnfache. Das bedeutet auch, daß für in unmittelbarer Nähe befindliche elektronische Schaltungen ein störungsfreier Betrieb innerhalb dieses Zeitraumes sichergestellt ist. Die Standzeit der Elektroden wird nur noch durch äußere Verschmut zung bzw. durch Verbrennungsrückstände begrenzt, so daß die Reinigungsintervalle für die Elektroden mindestens verzehnfacht werden. Desweiteren erhöht sich damit die Lebensdauer der Elektroden, da bei jeder Reinigung durch Schleifpapier oder ähnliches die Form der einander zugewandten Endbereiche der Elektroden geändert wird, bis die Elektroden schließlich unbrauchbar sind und ersetzt werden müssen.

Vorteilhafte Weiterbildungen der Erfindung sind in den Unteransprüchen wiedergegeben.

Die erfindungsgemäße Vorrichtung sowie deren Weiterbildungen werden nachfolgend anhand von Zeichnungen näher erläutert.

Es zeigen

FIG 1 eine Elektrode aus einheitlichem Material,

FIG 2 eine Elektrode aus einem Stahlzylinder mit einer Spitze aus anderem Material,

FIG 3 eine Abwandlung nach FIG 2,

FIG 4 eine Elektrode mit einem Kern aus anderem Material,

FIG 5 einen Querschnitt nach FIG 4,

FIG 6 eine Elektrodenspitze in vergrößerter Darstellung,

FIG 7 ein transportables Spleißgerät mit erfindungsgemäßen Elektroden in schematischer Darstellung.

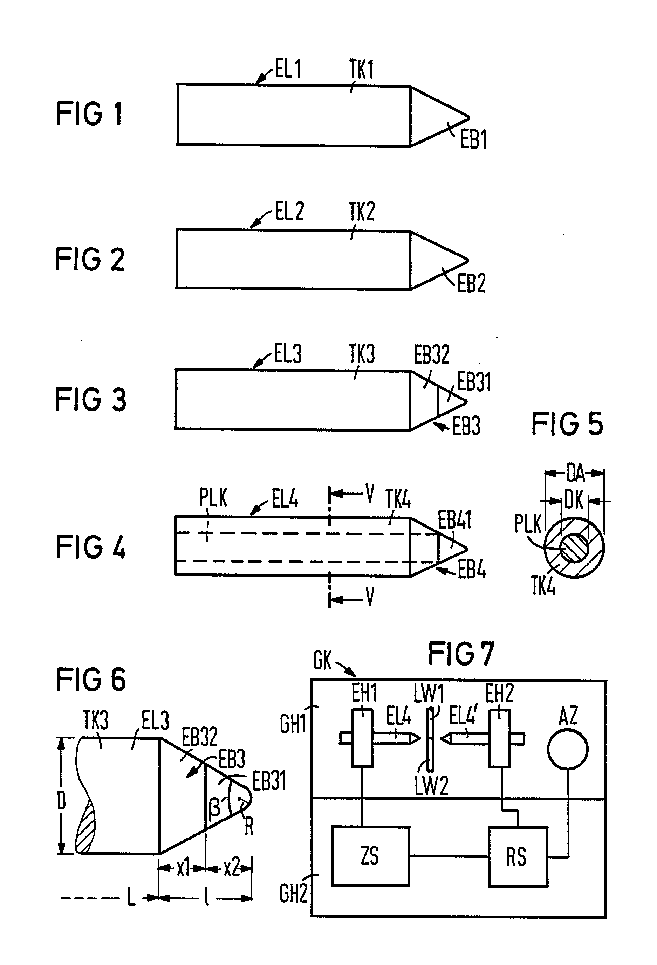

Bei der in FIG 1 dargestellten Ausführungsform besteht sowohl der Tägerkörper TK1 als auch der Endbereich EB1 der Elektrode EL1 aus einem Material mit einer Oxidationstemperatur über der von Wolfram (800 - 1100°C). Als Materialien hierfär kommen z.B. in Frage Bor, Molybtän-Zirkonium-Oxid und Platin. Da bevorzugt Platin verwendet wird, ist in den nachfolgenden Beispielen stets nur konkret auf den Einsatz von Platin abgestellt. Einem einfachen Herstellungsprozeß steht aber der relativ hohe Materialpreis der genannten Materialien gegenüber. Da z.B. Platin weicher als Wolfram ist, sind außerdem derartige Massivelektroden EL1 mechanisch unstabil, so daß sich beim Ein-und Ausbau die Elektroden EL1 leicht verbiegen können.

Bei der Ausführungsform nach FIG 2 besteht der Trägerkörper TK2 aus einem Trägerwerkstoff, vorzugsweise gehärtetem Stahl, und nur der Endbereich EB2 der Elektrode EL2 aus z.B. Platin. Obwohl gegenüber der Ausführungsform nach FIG 1 zusätzliche Fertigungsschritte erforderlich sind, treten Probleme durch mechanische Instabilität nicht auf und auch der Aufwand an teurem Platin reduziert sich beträchtlich. Bei der Herstellung wird vorteilhaft so vorgegangen, daß das Platinstück an den Trägerkörper TK2 angelötet oder angeschweißt (Elektronenstrahlschweißen) wird. Danach wird das Platinstück durch Schleifen in seine endgültige Form, beispielsweise konusförmig, gebracht und die Länge der Elektrode EL2 am gegenüberliegenden Trägerkörperende durch Abschleifen eingestellt. Es ist aber auch möglich so zu verfahren, daß die Elektroden EL2 aus einem Trägerwerkstoff, vorzugsweise gehärtetem Stahl, bestehen, der ganz oder teilweise (d.h. zu mindest an den Endbereich EB2) mit einem Überzug aus dem genannten Material versehen ist. Wird die Elektrode EL2 aus der Einfassung von dem Endbereich EB2 her entnommen, können am Übergangsbereich zwischen Endbereich EB2 und Trägerkörper TK2 Beschädigungen auftreten, da das Entnahmewerkzeug dort zuerst aufsetzt und der aus Platin bestehende Endbereich EB2 weich ist.

Eine weitere vorteilhafte Ausführungsform einer Elektrode EL3 ist in FIG 3 dargestellt. Der Trägerkörper TK3 sowie ein anschließender Teil EB32 des Endbereiches EB3 bestehen aus einem Trägerwerkstoff, vorzugsweise gehärtetem Stahl ST, während nur der vordere Teil EB31 des Endbereiches EB3 aus z.B. Platin besteht. Beschädigungen am Übergangsbereich zwischen Trägerkörper TK3 und Endbereich EB3 können somit nicht mehr auftreten.

Bei der Ausführungsform nach FIG 4 und FIG 5 weist die Elektrode EL4 einen länglichen Kern PLK z.B. aus Platin mit vorzugsweise rundem Querschnitt auf. An der Schnittstelle V aus FIG 4 ist der Querschnitt der Elektrode EL4 in FIG 5 dargestellt. Der in axialer Richtung verlaufende Platinkern PLK ist von einem Trägerkörper TK4 aus vorzugsweise gehärtetem Stahl mantelförmig umgeben. Dabei ragt der Platinkern PLK an einem Ende der Elektrode EL4 über den Stahlmantel hinaus und bildet damit den vorderen Teil EB41 des Endbereiches EB4 der Elektrode EL4. Bei vorteilhafter zylindrischer Form der Elektrode EL4 beträgt das Verhältnis der Außendurchmesser DA der Elektrode EL4 zum Durchmesser DK des Platinkerns PLK vorzugsweise 2:1. Bei dieser Ausführungsform entfällt ein Anschweißen eines Platinendstükkes. Die Länge und der Endbereich EB4 der Elektrode EL4 werden vorteilhaft in einem Arbeitsgang hergestellt.

In FIG 6 sind eine vorteilhafte Ausgestaltung und die typischen Abmessungen der vorstehend beschriebenen Elektroden EL1 - EL4 anhand des Ausführungsbeispieles nach FIG 3 dargestellt. Der Trägerkörper TK3 (FIG 6 zeigt nur einen Teil davon) ist von zylindrischer Gestalt und weist dabei eine Länge L von 10 -40 mm und einen Durchmesser D von 1 - 3 mm auf. Der Endbereich EB3, an dem der Entladungsvorgang stattfindet, ist spitz zulaufend, vorzugsweise kegelförmig, ausgebildet. Der aus z.B. Platin bestehnde vordere Teil EB31 des Endbereichs EB3 ist abgerundet, wobei der Verrundungsradius R im Bereich zwischen 20 und 500 μm liegt. Dadurch wird eine bessere mechanische Stabilität erreicht und ein Verbiegen des vordersten Endbereiches EB31 bei Berührung weitgehend ausgeschlossen. Der Kegelöffnungswinkel liegt im Bereich zwischen 20 und 50°C. Die Länge 1 des sich verjüngenden Endbereiches EB3 beträgt etwa 10 - 30 % der gesamten Elektrodenlänge. Das Verhältnis der Länge x1 des vorderen Platinteiles EB31 zur Länge x2 des aus Stahl bestehenden Kegelstumpfes EB32 des Endbereiches EB3 sollte so gewählt werden, daß die Austrittszone der Elektronen und damit der Glimmentladungsbereich mindestens 1 mm vor dem Kegelstumpf EB32 aus Stahl endet, damit ein Schmelzen des Stahlkörpers ausgeschlossen ist.

FIG 7 zeigt eine vorteilhafte Anwendung der erfindungsgemäßen Elektroden in einem transportablen Spleißgerät für Lichtwellenleiter. Der aus den Gehäusehälften GH1 und GH2 bestehende Gerätekoffer GK weist 2 Elektroden EL4, EL4', beispielsweise entsprechend der Ausführungsform nach FIG 4, auf. Die in die Elektrodenhalterung EH1 bzw. EH2 montierten Elektroden EL4 und EL4'

weisen mit ihren verjüngten Endbereichen zueinander, wobei der Einfachheit halber Elektrodenverstelleinrichtungen und Lichtwellenleiterhalterungen für die im Elektrodenbereich aneinander stoßenden Lichtwellenleiter LW1 und LW2 nicht dargestellt sind. Zündschaltungen ZS und mikroprozessor-gesteuerte Regelschaltungen RS generieren und steuern einen Lichtbogen zwischen den einander zugewandten Elektrodenspitzen. Durch ein Anzeigeinstrument AZ kann der Glimmentladungsstrom überwacht werden. Durch die erfindungsgemäßen Elektroden EL4,EL4' wird nun erstmals ein langer störungsfreier Spleißbetrieb ermöglicht, und außerdem werden empfindliche elektronische Regelschaltungen und weitere, im Gerät untergebrachte elektronische Funktionsgruppen nicht durch elektromagnetische Störfelder beeinträchtigt.

Die Erfindung beschränkt sich nicht nur auf Schweißvorrichtungen für Lichtwellenleiter sondern erstreckt sich auf alle Bearbeitungen von lichtleitenden Elementen, sofern eine Wärmequelle erforderlich ist, wie beispielsweise beim Ziehen von Lichtwellenleiterübergängen (Tapern) für Lichtwellenleiter-Laserkoppler oder faseroptischen Koppler.

Die Verwendung von Platin hat auch noch den besonderen Vorteil, daß bei diesem Material eine Art Selbstreinigung zu beobachten ist, d.h. auch nach vielfachem Gebrauch ist die Metalloberfläche immer noch blank (möglicherweise infolge eines katalytischen Effektes).

**Ansprüche**

1. Vorrichtung zur Erzeugung einer elektrischen Glimmentladung für die Wärmebearbeitung von lichtleitenden Elementen mittels eines zwischen Elektroden (EL1) erzeugten Lichtbogens,
**dadurch gekennzeichnet,**
daß zumindest die einander zugewandten Endbereiche (EB1) der Elektroden (EL1) aus einem Material bestehen, dessen Oxidationstemperatur über der von Wolfram liegt.

2. Vorrichtung nach Anspruch 1,
**dadurch gekennzeichnet,**
daß die Elektroden (EB1) zumindest zum Teil aus dem genannten Material bestehen.

3. Vorrichtung nach Anspruch 1,
**dadurch gekennzeichnet,**
daß die Elektroden (EL2) aus einem Trägerwerkstoff, vorzugsweise gehärtetem Stahl, bestehen, der mit einem Überzug aus dem genannten Material versehen ist.

4. Vorrichtung nach einem der vorhergehenden Ansprüche,
**dadurch gekennzeichnet,**
daß die Endbereiche (EB1) der Elektroden (EL1) verjüngt, insbesondere konusförmig ausgebildet sind.

5. Vorrichtung nach Anspruch 4,
**dadurch gekennzeichnet,**
daß bei konzentrischer Ausbildung der Konuswinkel ($\beta$) zwischen 30 und 50° gewählt ist.

6. Vorrichtung nach einem der vorhergehenden Ansprüche 4 oder 5,
**dadurch gekennzeichnet,**
daß die Länge (1) des verjüngten Teiles (EB1) der Elektroden (EL1) etwa zwischen 10 % und 30 % der gesamten Elektrodenlänge beträgt.

7. Vorrichtung nach einem der vorhergehenden Ansprüche 4 bis 6,
**dadurch gekennzeichnet,**
daß der Durchmesser (D) der Elektroden (EL1) im nichtverjüngten Bereich zwischen 1 und 3 mm gewählt ist.

8. Vorrichtung nach einem der vorhergehenden Ansprüche,
**dadurch gekennzeichnet,**
daß nur der verjüngte Teil (EB3) der Elektroden (EL3) ganz oder teilweise aus Platin besteht oder mit diesem beschichtet ist.

9. Vorrichtung nach einem der vorhergehenden Ansprüche,
**dadurch gekennzeichnet,**
daß die Elektroden (EL4) einen in axialer Richtung verlaufenden Kern (PLK) aus dem genannten Material aufweisen, der von einem Mantel aus Trägerwerkstoff, vorzugsweise Stahl derart umgeben ist, daß der Kern (PLK) über den Trägerwerkstoff hinausragt und dadurch den vorderen Endbereich (EB41) der Elektroden (EL4) bildet.

10. Vorrichtung nach einem der vorhergehenden Ansprüche,
**dadurch gekennzeichnet,**
daß der Endbereich (EB1) der Elektroden (EL1) abgerundet ist.

11. Vorrichtung nach einem der vorhergehenden Ansprüche,
**dadurch gekennzeichnet,**
daß der Verrundungsradius (R) des Endbereiches (EB1) im Bereich zwischen 20 und 500 $\mu$m liegt.

12. Vorrichtung nach einem der vorhergehenden Ansprüche,
**gekennzeichnet durch**
die Anwendung als Schweißgerät für die Verbindung von Lichtwellenleitern.

13. Vorrichtung nach einem der vorhergehenden Ansprüche 1 - 11,
**gekennzeichnet durch**
die Anwendung beim Ziehen von Lichtwellenleiterübergängen (Taper) für Lichtwellenleiter-Laserkoppler oder faseroptischen Koppler.

14. Vorrichtung nach einem der vorhergehenden Ansprüche,

**dadurch gekennzeichnet,**

daß das genannte Material aus Platin besteht.

15. Vorrichtung nach einem der vorhergehenden Ansprüche 1 - 13,

**dadurch gekennzeichnet,**

daß das genannte Material aus Bor besteht.

16. Vorrichtung nach einem der vorhergehenden Ansprüche 1 - 13,

**dadurch gekennzeichnet,**

daß das genannte Material ein Molybdän-Zirkonium-Oxid ist.

17. Vorrichtung nach einem der vorhergehenden Ansprüche,

**gekennzeichnet durch**

die Anwendung im Bereich von gegen elektromagnetischen Feldern empfindlichen Bauteilen, insbesondere elektronische Schaltungen und/oder Microprozessoren.

18. Vorrichtung nach Anspruch 17,

**dadurch gekennzeichnet,**

daß die elektronischen Bauteile (ZS,RS) zusammen mit den Elektroden (EL4,EL4') der Vorrichtung in einem gemeinsamen Gehäusekoffer (GK) untergebracht sind.

FIG 1

EL1  TK1  EB1

FIG 2

EL2  TK2  EB2

FIG 3

EL3  TK3  EB32  EB31  EB3

FIG 5

DA  DK  PLK  TK4

FIG 4

PLK  EL4  V  TK4  EB41  EB4  V

FIG 6

TK3  EL3  EB32  EB3  EB31  D  β  R  x1  x2  L  l

FIG 7

GK  EH1  LW1  EH2  AZ  GH1  EL4  EL4'  LW2  GH2  ZS  RS

| | Europäisches Patentamt | EUROPÄISCHER RECHERCHENBERICHT | Nummer der Anmeldung EP 88 10 3091 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 196 137 (PHILIPS) <br> * Spalte 2, Zeilen 7-16; Figuren * <br> --- | 1,4,5, 10-13 | H 05 B 7/16 <br> H 05 B 7/08 <br> C 03 B 37/14 |
| A | FR-A-1 409 612 (UNION CARBIDE) <br> * Seite 2, linke Spalte, letzter Abschnitt; rechte Spalte, Abschnitt 1 * <br> --- | 1,2,4,5 ,9,16 | |
| A | FR-A-1 387 956 (UNION CARBIDE) <br> * Seite 2, linke Spalte, Abschnitte 4-6 * <br> --- | 1-4,9, 16 | |
| A | FR-A-2 482 817 (VSESOJUZNY et al.) <br> * Seite 12, Zeile 21 - Seite 13, Zeile 28; Figur 2 * <br> --- | 1,2,4, 10 | |
| A | FR-A-1 421 353 (SAINT-GOBAIN) <br> --- | | |
| A | US-A-3 967 118 (STERNBERG) <br> --- | | |
| A | GB-A-1 273 631 (INSTITUT E.O. PATONA) <br> ----- | | |

| | RECHERCHIERTE SACHGEBIETE (Int. Cl.4) |
|---|---|
| | H 05 B 7/00 <br> C 03 B 37/00 <br> H 05 B 31/00 <br> H 01 T 19/00 |

Der vorliegende Recherchenbericht wurde für alle Patentansprüche erstellt

| Recherchenort | Abschlußdatum der Recherche | Prüfer |
|---|---|---|
| DEN HAAG | 09-06-1988 | RAUSCH R.G. |